# EUROPEAN PATENT APPLICATION

(11) **EP 4 737 537 A1**
(43) Date of publication of application: **06.05.2026**
(21) Application number: 24864981.6
(22) Date of filing: 25.04.2024
(51) Int. Cl.: C10B 57/04, C10B 53/02

(54) **METHOD FOR PRODUCING COKE**

(30) Priority: 13.09.2023 JP 2023148711
(71) Applicant: JFE Steel Corporation, Tokyo, 100-0011 (JP)
(72) Inventor: KAWAI, Yuya, Tokyo 100-0011 (JP); TAKASHIMA, Takanori, Tokyo 100-0011 (JP)
(74) Representative: Hoffmann Eitle
(86) International application number: PCT/JP2024/016348
(87) International publication number: WO 2025/057472

(57) **Abstract**

Provided is a new index for biomass-derived raw material that can replace a portion of coal used in the production of coke for blast furnaces, and a means for producing high-strength coke even when biomass-derived raw material is blended with coal. Carbonized biomass having a shrinkage rate of 4.0 % or more and 10.0 % or less at 600 °C to 1000 °C is blended with a coal blend to produce coke.

## Description

### TECHNICAL FIELD

The present disclosure relates to a method of producing coke using biomass as a portion of raw material.

### BACKGROUND

Coke is a mainly carbon agglomerate product obtained by dry-distilling coal. Blast furnace coke used in a blast furnace functions as a heat source and a reducing agent, and also as a support material that secures gas permeability and liquid permeability inside the blast furnace. Therefore, in order to secure stable operation of the blast furnace, the agglomerate coke is required to have sufficient mechanical strength.

In the production of blast furnace coke, a coal blend in which multiple types of coal are blended in a defined proportion is used. The coal blend is dry-distilled at a temperature of 1000 °C or higher either as is or after being molded, to obtain agglomerated coke in which coal particles are bonded together. By using a type of coal called caking coal, which has a property of easily softening and melting, as a portion of the coal blend, it is possible to obtain coke that has high strength.

Two types of measured values of coal have conventionally been used as indices for managing coke strength. One is an average maximum reflectance of vitrinite (hereinafter referred to as "Ro") as specified in Japanese Industrial Standard M 8816:1992 "Solid mineral fuels - Methods of microscopical measurement for the macerals and reflectance". The higher the Ro value of coal, the higher the degree of carbonization and the stronger the coke matrix tends to be. The other is maximum fluidity according to a Gieseler plastometer (hereinafter referred to as "MF"), as specified in Japanese Industrial Standard M 8801:2004 "Coal-testing methods". The higher the MF value of coal, the more the coal tends to soften, melt, and flow when heated.

In recent years, societal efforts to mitigate the impact of global warming by decreasing carbon dioxide emissions into the atmosphere, one of the greenhouse gases, have been accelerating. For this reason, studies are underway to replace a portion of the coal used to make coke with carbon-neutral raw material such as biomass. For example, in Patent Literature (PTL) 1, a method of producing highly reactive blast furnace coke is described, in which biomass is heated to 1000 °C or higher to pyrolyze the biomass, and the resulting solid biomass char having a diameter of 1 mm or less is added to a coal blend.

### CITATION LIST

### Patent Literature

PTL 1: JP 2014-077086 A

### SUMMARY

### (Technical Problem)

When attempting to replace a portion of the coal used to make coke with a biomass-derived raw material, even a small substitution ratio can significantly decrease the strength of the resulting coke.

Conventionally, Ro and MF, which are effective indices for managing the strength of coke, are both indices for measurement of coal. Therefore, when attempting to measure Ro and MF for a sample consisting only of biomass-derived raw material, the properties of coal and biomass are significantly different, and therefore it is either impossible to carry out the measurements, or even if the measurements could be carried out, the measured values could not be used as indices for managing the strength of such coke. Therefore, a new index for managing the strength of coke is required.

In view of the problems described above, it would be helpful to provide a new index for biomass-derived raw material that can replace a portion of the coal used in producing coke for blast furnaces, and to provide a means of producing high-strength coke even when biomass-derived raw material is blended with coal.

### (Solution to Problem)

The primary features of the present disclosure are as follows.
[1] A method of producing coke, the method comprising:
   dry-distilling a mixture obtained by blending a defined proportion of carbonized biomass with a coal blend for coke production, wherein a proportion of the carbonized biomass having a particle size of 3.0 mm or less is 70 mass% or more and 100 mass% or less, and
   the carbonized biomass has a shrinkage rate of 4.0 % or more and 10.0 % or less at 600 °C to 1000 °C.
[2] A method of producing coke, the method comprising:
   dry-distilling a mixture obtained by blending a defined proportion of carbonized biomass with a coal blend for coke production, wherein a proportion of the carbonized biomass having a particle size of 1.0 mm or less is 70 mass% or more and 100 mass% or less, and
   the carbonized biomass has a shrinkage rate of 2.0 % or more and 10.0 % or less at 600 °C to 1000 °C.
[3] The method of producing coke according to [1] or [2], above, wherein the defined proportion of the carbonized biomass in the mixture is 1.0 mass% or more and 10.0 mass% or less.
[4] The method of producing coke according to any one of [1] to [3], above, wherein a proportion of the coal blend for coke production having a particle size of 3.0 mm or less is 70 mass% or more and 100 mass% or less.

### (Advantageous Effect)

According to the present disclosure, a property of biomass-derived raw material suitable for replacing a portion of the coal used in the production of coke for use in a blast furnace is revealed. This makes it possible to produce high-strength coke even when biomass-derived raw material is blended with coal. Further, carbon dioxide emissions derived from fossil fuel can be decreased.

### BRIEF DESCRIPTION OF THE DRAWINGS

In the accompanying drawings:
FIG. 1 is a graph illustrating a relationship between a shrinkage rate of carbonized biomass and a drum strength index of coke using carbonized biomass having a particle size of 3.0 mm or less as a portion of raw material; and
FIG. 2 is a graph illustrating a relationship between a shrinkage rate of carbonized biomass and a drum strength index of coke using carbonized biomass having a particle size of 1.0 mm or less as a portion of raw material.

### DETAILED DESCRIPTION

Embodiments of the present disclosure are described in detail below.

According to an embodiment, a method of producing coke according to the present disclosure includes dry-distilling a mixture obtained by blending a defined proportion of carbonized biomass with a coal blend for coke production, wherein a proportion of the carbonized biomass having a particle size of 3.0 mm or less is 70 mass% or more and 100 mass% or less, and the carbonized biomass has a shrinkage rate of 4.0 % or more and 10.0 % or less at 600 °C to 1000 °C.

### [Carbonized biomass]

According to the present embodiment, "biomass" refers to organic industrial resources derived from plants and animals that exist in the current ecosystem. Organic matter that makes up biomass circulates within the ecosystem, changing form. Carbon dioxide produced when biomass is burned originates from carbon absorbed by living organisms as the plants and animals grow, and therefore does not affect the total amount of carbon dioxide in the atmosphere and is considered to be in a so-called carbon-neutral state. In contrast, carbon dioxide produced when fossil fuels are burned originates from underground resources isolated from the current ecosystem, and is therefore not considered to be in a carbon-neutral state. Accordingly, fossil fuels such as coal and petroleum are not included in the biomass according to the present embodiment.

The biomass used according to the present embodiment may be any type of biomass that can be used as an industrial resource, including products produced in fields such as agriculture, forestry, livestock farming, and fisheries, as well as waste generated during the production process, and that satisfies the defined conditions described below. According to a preferred embodiment, the biomass includes at least one of palm kernel shells or woody biomass. Palm kernel shells are biomass produced as a by-product after palm oil is extracted from palm kernels. Palm kernel shells are inexpensive and have adequate strength, and are therefore suitable as the biomass used according to the present embodiment. Examples of woody biomass include biomass made from wood of conifers such as Japanese cedar, pine, and Japanese cypress, and broad-leaved trees such as zelkova, birch, and eucalyptus. The part of the wood is not limited. Woody biomass includes waste wood from construction and papermaking, as well as unused parts such as thinned wood from forestry. Sawdust produced during lumber production is one representative example of woody biomass.

The method of producing coke according to the present disclosure uses carbonized biomass produced by heat-treating biomass. In the heat treatment of the biomass, the biomass is heat-treated in an atmosphere from which air is excluded. By carrying out the heat treatment of the biomass in an atmosphere from which air is excluded, the progress of combustion of the biomass is hindered, and the biomass can be carbonized. To achieve an atmosphere from which air is excluded, for example, a container is prepared that forms a space in which inflow of air is inhibited and an inert gas is allowed to flow, and the biomass is placed inside the container and subjected to heat treatment.

A temperature at which the biomass is heat-treated may be adjusted appropriately depending on the type and particle size of the biomass so that the shrinkage rate at 600 °C to 1000 °C falls in a suitable range. For example, when palm kernel shells are used as the biomass, a temperature of 400 °C or higher promotes sufficient carbonization and improves grindability, while a temperature of 800 °C or lower makes the shrinkage rate described below fall within an appropriate range, and therefore a temperature of 400 °C or higher and 800 °C or lower is preferred. The temperature at which the biomass is heat-treated is preferably higher from the viewpoint of grindability, and is preferably lower from the viewpoint of shrinkage rate. Hereinafter, "heat treatment temperature" refers to a maximum arrival temperature of the biomass when subjected to heat treatment.

A heat treatment time varies depending on the type of biomass and the mass of the biomass to be heat-treated at one time, but is preferably 1 min or longer. The heat treatment time is preferably 60 min or shorter. The heat treatment time is more preferably 10 min or longer. The heat treatment time is more preferably 30 min or shorter. Hereinafter, "heat treatment time" refers to a time from when the temperature of the biomass reaches the temperature at which the heat treatment is carried out until the heat treatment temperature is no longer maintained.

### [Grinding]

According to the present embodiment, the proportion of carbonized biomass having a particle size of 3.0 mm or less is 70 mass% or more and 100 mass% or less. When the proportion of particles having a particle size of 3.0 mm or less is 70 mass% or more and 100 mass% or less, the carbonized biomass can be uniformly mixed with the coal blend. A preferred particle size range for the carbonized biomass is 100 mass% of the carbonized biomass having a particle size of 3.0 mm or less. There is no lower limit on the particle size. That is, the particle size may be greater than 0 (zero). When grinding is carried out for the purpose of adjusting the particle size of the biomass or the carbonized biomass, a publicly available grinder may be used. The grinding may be carried out on the biomass before carbonization, on the carbonized biomass after carbonization, or on both.

Hereinafter, the term "particle size" corresponds to the nominal aperture size of the test sieve specified in Japanese Industrial Standard Z 8801-1:2019 "Test sieves - Part 1: Test sieves of metal wire cloth". That is, granular material having a particle size larger than X mm is granular material that remains on a sieve when sieved using a sieve having a nominal aperture size of X mm. Granular material having a particle size of Y mm or less is granular material that falls below the sieve when sieved using a sieve having a nominal aperture size of Y mm.

When producing large amounts of carbonized biomass on an industrial scale, omission of sorting using a sieve can increase yield and decrease production costs. In such a case, the proportion of particle size 3.0 mm or less in the particle size distribution of the carbonized biomass based on mass is 70 mass% or more. When sorting is not carried out, the proportion of particle size 3.0 mm or less is preferably 80 mass% or more. The proportion of particle size 3.0 mm or less is more preferably 90 mass% or more. An upper limit of the proportion of particles size 3.0 mm or less is 100 mass%. The particle size distribution of the carbonized biomass based on mass can be determined by a known method from a sample taken from a large amount of produced carbonized biomass, such as measuring the weight of a sample sieved using multiple sieves with different aperture sizes, irradiating a sample with a laser, or the like.

### [Blend]

In the method of producing coke according to the present embodiment, coke is produced by dry-distilling a mixture obtained by blending carbonized biomass in a defined proportion with a coal blend for coke production. The coal blend may be any coal blend suitable for producing coke. A coal blend suitable for producing coke refers to a coal blend that can produce high-strength coke when dry-distilling is carried out with only the coal blend as a raw material. Whether or not a coal blend is suitable for producing coke can be predicted from the Ro and MF values of the coal blend.

A proportion of coal particles having a particle size of 3.0 mm or less in the coal blend for coke production is preferably 70 mass% or more and 100 mass% or less. When the particle size of the coal blend is coarse, a property distribution occurs in coke production using a mixture of components of coal and the like having different properties. The proportion of the coal blend having a particle size of 3.0 mm or less is therefore preferably 70 mass% or more. The proportion of the coal blend having a particle size of 3.0 mm or less is more preferably 75 mass% or more. On the other hand, when the particle size is too fine, bulk density of the coal blend charged into the coke oven decreases, which may cause a decrease in coke strength. The proportion having a particle size of 3.0 mm or less is therefore preferably 90 mass% or less. The proportion having a particle size of 3.0 mm or less is more preferably 85 mass% or less.

In a mixture obtained by blending the carbonized biomass in a defined proportion with a coal blend for coke production, when the proportion of the carbonized biomass in the mixture is 1.0 mass% or more, a significant effect in decreasing carbon dioxide emissions can be obtained, and when 10.0 mass% or less, the strength of the obtained coke is not remarkably decreased. Accordingly, the proportion of biomass is preferably 1.0 mass% or more. The proportion of biomass is preferably 10.0 mass% or less. The proportion of the biomass is more preferably 2.0 mass% or more. The proportion of the biomass is more preferably 7.0 mass% or less.

In the method of producing coke according to the present disclosure, the mixture obtained by blending the coal blend and the carbonized biomass in a defined proportion may be sufficiently mixed without carrying out any operation specifically designed for mixing. Specific examples of such cases include a case where a mixture transported by a belt conveyor falls onto the next belt conveyor, a case where a coal blend and carbonized biomass are blended and then ground using grinding apparatus, and a case where a coal blend and carbonized biomass are blended and then moisture content is adjusted while agitating using coal moisture control apparatus. In such cases, the apparatus and costs required for mixing can be reduced, which is preferable.

In the mixture, the coal blend and the carbonized biomass are preferably mixed uniformly. This can help prevent the problem of carbonized biomass that does not soften or melt when heated being unevenly locally concentrated and remaining unsolidified even after the dry distillation process. When the mixing is insufficient, a coal mixer may be used to mix the coal blend with the carbonized biomass. As the coal mixer, for example, a mixer that mainly carries out convective mixing, a mixer that mainly carries out shear mixing, a mixer that carries out a combination of convective mixing and shear mixing, or the like may be used. Here, convective mixing refers to mixing that is primarily caused by convection and diffusion of the sample, and shear mixing refers to mixing that involves shearing, collision, grinding, and the like of the sample.

### [Dry distillation]

In the method of producing coke according to the present embodiment, coke is produced by dry-distilling a mixture obtained by blending carbonized biomass in a defined proportion with a coal blend for coke production. The mixture is charged into a coke oven and heated in an atmosphere from which air is excluded to be dry-distilled.

When the dry distillation temperature is 900 °C or higher, coke having sufficient strength is obtainable. A temperature of 950 °C or higher is more preferable. On the other hand, when the dry distillation temperature exceeds 1250 °C, a huge amount of energy is required for heating, and the coke may thermally decompose, resulting in a decrease in strength. The dry distillation temperature is therefore preferably 1250 °C or lower. The dry distillation temperature is more preferably 1100 °C or lower. The dry distillation temperature refers to the maximum arrival temperature of the mixture during dry distillation.

### [Shrinkage rate]

According to the method of producing coke of the present embodiment the shrinkage rate of the carbonized biomass at 600 °C to 1000 °C is 4.0 % or more and 10.0 % or less.

A sample for measuring shrinkage rate may be prepared by grinding carbonized biomass and molding to dimensions that meets the specifications of a measuring device. It is preferable that the ground particle size of the carbonized biomass is one-tenth or less of the height of the sample for shrinkage rate measurement, that is, the length measured in the direction in which the shrinkage amount is measured, because this eliminates the influence of anisotropy in the shrinkage amount of the carbonized biomass sample and enables stable measurement results to be obtained. From this viewpoint, the ground particle size of the carbonized biomass is, for example, preferably 0.3 mm or less. The ground particle size of the carbonized biomass is more preferably 0.1 mm or less.

Further, the purpose is to measure the shrinkage rate of the carbonized biomass itself, and therefore the sample for measuring the shrinkage rate after molding is required to have few voids. Therefore, although depending on the density of the carbonized biomass itself used in the test, the density of the sample for shrinkage rate measurement is preferably 0.2 g/cm³ or more. The density of the sample is more preferably 0.4 g/cm³.

When obtaining a molded product as a sample for measuring the amount of shrinkage is difficult, the sample may be loaded into a container having dimensions that meet the specifications of the measuring device and used as the sample for measuring the shrinkage amount. In such a case, in order to eliminate the influence of thermal expansion of the container, the container is preferably made of a material that has a small thermal expansion coefficient, such as alumina.

The shrinkage rate of the sample can be measured using a known measuring device such as a thermomechanical analyzer (TMA) or a thermal dilatometer. The measuring device used to measure the shrinkage rate needs to be capable of heating the sample up to 1000 °C while controlling the temperature, and of measuring a change in length of the sample in the direction in which the shrinkage rate is to be measured. Further, a mechanism that can detect a change in dimensions when the sample shrinks, such as a contactor, is preferably provided.

According to the present embodiment, the shrinkage rate of the sample is measured in the temperature range from 600 °C to 1000 °C. Typically, biomass releases moisture and volatile matter as the temperature increases, which causes the biomass to shrink. In contrast, caking coal, which is widely used in coke production, undergoes complex changes with increasing temperature that are not seen in biomass. That is, the caking coal softens and melts at temperatures of 300 °C or higher, and the caking coal particles adhere to each other. Thereafter, the caking coal resolidifies at a temperature of 500 °C or higher, becoming a solid as a whole. Further, after resolidification, the caking coal shrinks while releasing volatile components in a temperature range around 1000 °C. Therefore, according to the present embodiment, the shrinkage rate of the carbonized biomass is measured in the temperature range of 600 °C or higher after the softening and melting of caking coal is completed and resolidification occurs. This allows a direct comparison of the shrinkage rate of caking coal that softens and melts and the shrinkage rate of the carbonized biomass that does not soften or melt.

In typical coke production, when the temperature of coal during dry distillation reaches 1000 °C, the release of volatile matter is almost complete and the resulting coke is sufficiently carbonized. Therefore, according to the present embodiment, the upper limit of the temperature range for measuring the shrinkage rate of the sample is 1000 °C. By measuring the shrinkage rate of the sample in the temperature range from 600 °C to 1000 °C, it is possible to know the shrinkage rate of the carbonized biomass in the dry-distilling process of the mixture of the coal blend and the carbonized biomass.

The shrinkage rate of the carbonized biomass obtained in the carbonization process varies depending on the type of carbonized biomass, the part of biomass used, and the like. According to the present embodiment, the carbonized biomass is selected and used such that, when measuring a sample taken from the carbonized biomass, the shrinkage rate from 600 °C to 1000 °C is 4.0 % or more and 10.0 % or less.

The reason why high-strength coke can be produced by using the carbonized biomass that satisfies the range of shrinkage rate specified according to the present embodiment is not fully understood, but it is thought to be due to the following reasons. As described above, coal shrinks while releasing volatile matter in the temperature range of 600 °C or higher. When the mixture is dry-distilled and the shrinkage amount of the coal blend is greatly different from the shrinkage amount of the carbonized biomass, stress is generated due to the difference in the shrinkage amounts. The coal blend-derived portion has already resolidified and therefore cannot relieve stress. This is thought to cause strain to accumulate throughout the coke, resulting in a decrease in strength.

Carbonized biomass that satisfies the range of shrinkage rate specified according to the present embodiment has a shrinkage rate close to that of the coal blend. For this reason, it is thought that stress generation and accumulation of strain due to differences in the shrinkage amounts is less likely to occur, and that a decrease in strength is less likely to occur.

The shrinkage rate at 600 °C to 1000 °C measured using a sample for shrinkage rate measurement can be controlled by the type of biomass and the conditions of heat treatment during carbonization. The higher the temperature of the heat treatment, the lower the shrinkage rate. The conditions for heat treatment to achieve a shrinkage rate of 4.0 % or more and 10.0 % or less vary depending on the type of biomass used and can be adjusted appropriately, but in most cases, the shrinkage rate can be adjusted to 4.0 % or more by carrying out heat treatment at a temperature less than 700 °C.

According to the present embodiment, a rate of temperature increase in measuring the shrinkage rate of the sample is preferably 1 °C or more per minute, since this does not take too long for the measurement. Further, a heating rate of coal in normal coke production is slow, and therefore the rate is preferably 10 °C or less per minute. Therefore, the heating rate in measuring the shrinkage rate of the sample is preferably 1 °C or more and 10 °C or less per minute. A more preferable lower limit of the rate of temperature increase is 2 °C or more per minute. A more preferable upper limit of the rate of temperature increase is 5 °C or less per minute.

According to the present embodiment, the atmosphere in which the shrinkage rate of the sample is measured is preferably an atmosphere from which air is excluded, for example, an atmosphere in which an inert gas is circulated. By measuring in an atmosphere from which air is excluded, combustion of the sample may be prevented and information on the shrinkage rate close to that during dry distillation may be obtainable.

According to another embodiment, a method of producing coke according to the present disclosure includes dry-distilling a mixture obtained by blending a defined proportion of carbonized biomass with a coal blend for coke production, wherein a proportion of the carbonized biomass having a particle size of 1.0 mm or less is 70 mass% or more and 100 mass% or less, and the carbonized biomass has a shrinkage rate of 2.0 % or more and 10.0 % or less at 600 °C to 1000 °C.

By changing the particle size of the carbonized biomass mixed with the coal blend from 3.0 mm or less to 1.0 mm or less, the range of shrinkage rates of the carbonized biomass to which the present disclosure is applicable can be expanded to a range lower than 4.0 %. Specifically, when the particle size of the carbonized biomass is 1.0 mm or less, the carbonized biomass can have a shrinkage rate of 2.0 % or more and 10.0 % or less at 600 °C to 1000 °C.

The reason why the range of shrinkage rate of the carbonized biomass to which the present disclosure is applicable can be expanded to a range lower than 4.0 % by decreasing the particle size of the carbonized biomass is not fully understood, but it is thought to be due to the following reasons. The finer the particle size of the carbonized biomass, the smaller the absolute value of the shrinkage amount per particle. This decreases the difference in absolute value of the shrinkage amount between the granular material of the coal blend surrounding the particles, thereby decreasing the strain caused by the difference in shrinkage amount, and as a result, it is thought that the strength of the obtained coke does not decrease.

### [Strength evaluation]

The effects of the present disclosure can be confirmed by evaluating the strength of the coke obtained by the method of producing coke according to the present embodiment. There are various methods for evaluating the strength of coke. Among them, the method of evaluating tumble strength of coke by the drum method specified in Japanese Industrial Standard K 2151:2004 "Coke - Testing methods" is preferable because it is a test that simulates the generation of dust from coke, which is a problem when used in a blast furnace, and is currently the most widely used method in Japan. The drum method is a method in which a sample is inserted into a specified drum testing machine, rotated at a specified speed for a specified number of revolutions, and then sieved through a defined sieve to determine the mass of each category, and the summed percentage (%) of the mass relative to the sample is expressed as the drum strength index (symbol: DI).

As described later, in the EXAMPLES section of this description, the rotation speed of the drum was set to 150 rpm, and the drum strength index (%) was defined as the proportion of the mass of coke that did not pass through a sieve having an aperture size of 15 mm after rotation to the mass of coke inserted into the drum testing machine. The drum strength index indicates the mass fraction of coke that was not ground to a size of 15 mm or less when rotated in the drum testing machine. A larger DI value indicates a higher coke strength.

### EXAMPLES

The following describes Examples of the present disclosure. Embodiments of the present disclosure are not limited to the following Examples, and embodiments of the present disclosure can be modified as desired without departing from the gist of the present disclosure.

A coal blend having an Ro of 1.0 % and a common logarithm of MF (log(MF/ddpm)) of 2.5 was prepared. The coal blend was ground to produce a coal blend in which the proportion of particles having a particle size of 3.0 mm or less was adjusted to 100 mass%. Two types of biomass were prepared: palm kernel shells and Japanese cedar. These biomasses were subjected to heat treatment for 60 minutes in an atmosphere from which air was excluded under five conditions in which the temperature of the biomass was from 400 °C to 900 °C, to obtain carbonized biomass. Each of the carbonized biomasses was ground to produce carbonized biomass in which the proportion of particles having a particle size of 3.0 mm or less or 1.0 mm or less was adjusted to 100 mass%. However, for some of the carbonized biomasses (Examples 6 and 7), the proportion of particles having a particle size of 3.0 mm or less was adjusted to 72 mass%.

The shrinkage rate of the carbonized biomass was measured by the following method. The carbonized biomass was ground to 0.1 mm or less, and the ground sample was loaded to a height of 7.0 mm into a cylindrical alumina cell having a diameter of 6.7 mm and a height of 9.2 mm to prepare a sample for measuring shrinkage rate. The sample was set in a thermomechanical analyzer TMA-60 produced by Shimadzu Corporation, and the temperature was increased at a rate of 3 °C per minute in a nitrogen atmosphere to measure the shrinkage rate in the height direction of the sample in the temperature range from 600 °C to 1000 °C. The measured values are listed in Table 1.

### [Table 1]

**Table 1**

| | Carbonized biomass | | | | | ΔDI (%) |
|---|---|---|---|---|---|---|
| | Type | Heat treatment temperature (°C) | Shrinkage rate (%) from 600 °C to 1000 °C | Particle size | Blend proportion (%) | |
| Example 1 | Palm kernel shells | 400 | 7.5 | -3.0 mm 100 % | 2.0 | -0.2 |
| Example 2 | Palm kernel shells | 400 | 7.5 | -3.0 mm 100 % | 5.0 | -0.5 |
| Example 3 | Palm kernel shells | 500 | 7.4 | -3.0 mm 100 % | 2.0 | 0.2 |
| Example 4 | Palm kernel shells | 500 | 7.4 | -3.0 mm 100 % | 5.0 | -1.0 |
| Example 5 | Palm kernel shells | 500 | 7.4 | -3.0 mm 100 % | 8.0 | -1.8 |
| Example 6 | Palm kernel shells | 500 | 7.4 | -3.0 mm 72 % | 2.0 | -0.1 |
| Example 7 | Palm kernel shells | 500 | 7.4 | -3.0 mm 72 % | 5.0 | -1.1 |
| Example 8 | Palm kernel shells | 600 | 6.1 | -3.0 mm 100 % | 2.0 | -0.1 |
| Example 9 | Palm kernel shells | 600 | 6.1 | -3.0 mm 100 % | 5.0 | -1.3 |
| Example 10 | Palm kernel shells | 700 | 4.7 | -3.0 mm 100 % | 2.0 | -1.9 |
| Example 11 | Japanese cedar | 500 | 8.9 | -3.0 mm 100 % | 2.0 | -0.9 |
| Example 12 | Japanese cedar | 500 | 8.9 | -3.0 mm 100 % | 5.0 | -1.9 |
| Example 13 | Japanese cedar | 700 | 6.9 | -3.0 mm 100 % | 2.0 | -1.3 |
| Example 14 | Palm kernel shells | 700 | 4.7 | -1.0 mm 100 % | 2.0 | -0.4 |
| Example 15 | Palm kernel shells | 700 | 4.7 | -1.0 mm 100 % | 5.0 | -1.8 |
| Example 16 | Japanese cedar | 700 | 6.9 | -1.0 mm 100 % | 2.0 | -0.7 |
| Example 17 | Japanese cedar | 700 | 6.9 | -1.0 mm 100 % | 5.0 | -1.1 |
| Example 18 | Palm kernel shells | 800 | 3.3 | -1.0 mm 100 % | 2.0 | -1.2 |
| Example 19 | Palm kernel shells | 800 | 3.3 | -1.0 mm 100 % | 5.0 | -1.9 |
| Comparative Example 1 | Palm kernel shells | 800 | 3.3 | -3.0 mm 100 % | 2.0 | -5.2 |
| Comparative Example 2 | Palm kernel shells | 900 | 0.9 | -3.0 mm 100 % | 2.0 | -10.0 |
| Comparative Example 3 | Palm kernel shells | 900 | 0.9 | -3.0 mm 100 % | 5.0 | -45.5 |
| Comparative Example 4 | Japanese cedar | 900 | 0.8 | -3.0 mm 100 % | 2.0 | -18.7 |
| Comparative Example 5 | Japanese cedar | 900 | 0.8 | -1.0 mm 100 % | 2.0 | -4.3 |
| Comparative Example 6 | Japanese cedar | 900 | 0.8 | -1.0 mm 100 % | 5.0 | -16.3 |
| Reference Example | 100 % coal blend (no biomass mixed) | | | | | 0.0 |

| | | | | | | |
|---|---|---|---|---|---|---|
| Underlining indicates value outside scope of present disclosure. Particle size indicates mass percentage of particles of 3.0 mm or less or 1.0 mm or less. | | | | | | |

The measurement results indicate that the higher the heat treatment temperature of the biomass, the smaller the shrinkage rate. The shrinkage rate of palm kernel shells was 3.3 % or less when the heat treatment temperature was 800 °C or higher. The shrinkage rate of Japanese cedar was 0.8 % when the heat treatment temperature was 900 °C or higher.

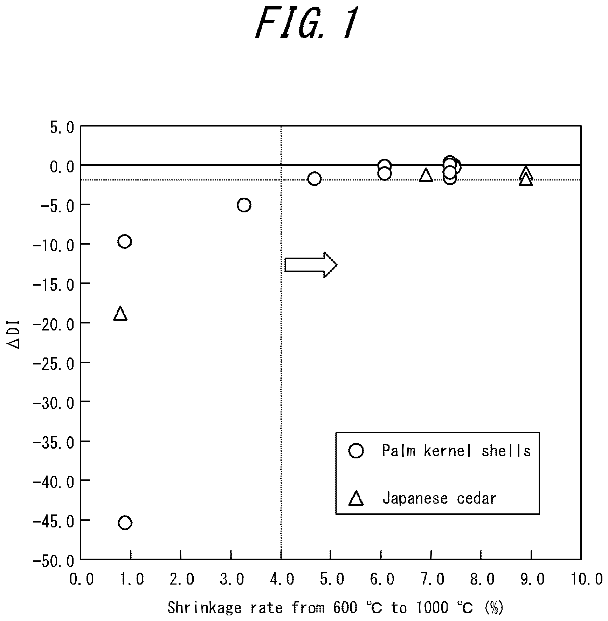

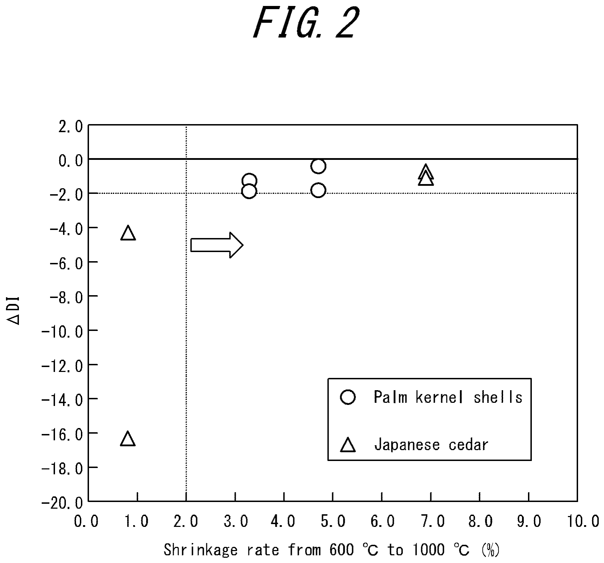

Next, the coal blend and the biomass were blended so that the biomass blend proportion in the mixture was 2.0 %, 5.0 %, or 8.0 %, and the moisture content was adjusted to 8.0 mass%, and 16 kg of each mixture was prepared. This mixture was loaded into a stainless steel container, which was then placed in an electric furnace through which nitrogen gas was circulated, where heating and dry distillation was carried out. The bulk density of the mixture in the container was 775 kg/m³ on a dry basis. The container loaded with the mixture was charged into an electric furnace set at a furnace wall temperature of 1050 °C, and the furnace wall temperature was maintained for 6 hours from charging to carry out dry distillation. The container was then transferred to a cooling apparatus through which nitrogen gas at room temperature was circulated to carry out cooling, obtaining coke containing biomass as a raw material. Further, in order to compare the drum strength index (DI), a Reference Example of only the coal blend was dry-distilled under the same conditions to obtain a coke made of 100 % coal blend that did not contain biomass as a raw material. Next, the drum strength index of the obtained coke was measured under the conditions of a drum rotation speed of 150 rpm and a sieve aperture size of 15 mm, and a difference ΔDI from the drum strength index of the coke made from 100 % coal blend was calculated. The calculated values are listed in Table 1. Further, FIG. 1 illustrates a relationship between the shrinkage rate and ΔDI when the maximum particle size of the carbonized biomass is 3.0 mm, and FIG. 2 illustrates a relationship between the shrinkage rate and ΔDI when the maximum particle size of the carbonized biomass is 1.0 mm.

According to FIG. 1, when the proportion of the carbonized biomass having a particle size of 3.0 mm or less was 72 mass% and 100 mass%, the ΔDI did not decrease by more than -2.0 % when the shrinkage rate was in the range from 4.7 % to 8.9 %. In such a case, the strength of the coke can be adjusted by adjusting the grade of the coal blend and the production conditions, and therefore it can be said that the level is not problematic in practice. In contrast, for the cokes of Comparative Examples 1 to 4, which had shrinkage rates of less than 4.0 %, a large decrease in the drum strength index was observed. Therefore, it can be seen that the method of producing coke according to the present disclosure can produce coke having higher strength, based on more reliable predictions than conventional technology.

According to FIG. 2, when the proportion of the carbonized biomass having a particle size of 1.0 mm or less was 100 mass%, the ΔDI did not decrease by more than -2.0 % when the shrinkage rate was in the range from 3.3 % to 6.9 %. For the cokes of Comparative Examples 5 and 6, which had shrinkage rates of less than 2.0 %, a large decrease in the drum strength index was observed, but the degree of decrease was less than that illustrated in FIG. 1. A comparison of FIG. 1 and FIG. 2 indicates that by decreasing the particle size of the carbonized biomass, the range of shrinkage rates of the carbonized biomass to which the present disclosure is applicable can be expanded to a lower range.

### INDUSTRIAL APPLICABILITY

According to the method of producing coke of the present disclosure, it is possible to produce coke having high strength that can withstand use in a blast furnace, even when a portion of the coal that is a raw material for the coke is replaced with biomass-derived raw material.

## Claims

1. A method of producing coke, the method comprising:
dry-distilling a mixture obtained by blending a defined proportion of carbonized biomass with a coal blend for coke production, wherein a proportion of the carbonized biomass having a particle size of 3.0 mm or less is 70 mass% or more and 100 mass% or less, and
the carbonized biomass has a shrinkage rate of 4.0 % or more and 10.0 % or less at 600 °C to 1000 °C.

2. A method of producing coke, the method comprising:
dry-distilling a mixture obtained by blending a defined proportion of carbonized biomass with a coal blend for coke production, wherein a proportion of the carbonized biomass having a particle size of 1.0 mm or less is 70 mass% or more and 100 mass% or less, and
the carbonized biomass has a shrinkage rate of 2.0 % or more and 10.0 % or less at 600 °C to 1000 °C.

3. The method of producing coke according to claim 1 or 2, wherein the defined proportion of the carbonized biomass in the mixture is 1.0 mass% or more and 10.0 mass% or less.

4. The method of producing coke according to any one of claims 1 to 3, wherein a proportion of the coal blend for coke production having a particle size of 3.0 mm or less is 70 mass% or more and 100 mass% or less.
